# EUROPÄISCHE PATENTSCHRIFT

(11) **EP 0 335 225 B1**
(45) Veröffentlichungstag und Bekanntmachung des Hinweises auf die Patenterteilung: **07.06.1995**
(21) Anmeldenummer: 89105008.0
(22) Anmeldetag: 21.03.1989
(51) Int. Cl.: A01N 55/00

(54) **Schädlingsbekämpfungsmittel**
Pesticidal agents
Agents pesticides

(30) Priorität: 26.03.1988 DE 3810378
(43) Veröffentlichungstag der Anmeldung: 04.10.1989
(73) Patentinhaber: Hoechst Schering AgrEvo GmbH, 13342 Berlin (DE)
(72) Erfinder: Waltersdorfer, Anna, Dr., D-6000 Frankfurt am Main 71 (DE); Kern, Manfred, Dr., D-6501 Lörzweiler (DE); Knauf, Werner, Dr., D-6239 Eppstein/Taunus (DE); Schubert, Hans-Herbert, Dr., D-6000 Frankfurt am Main 71 (DE)

(56) Entgegenhaltungen:
- EP-A- 0 224 024
- EP-A- 0 249 015

## Beschreibung

Aus den EP-A 0249015 und 0224024 sind insektizide und akarizide Mittel bekannt, die unter anderem gekennzeichnet sind durch einen Gehalt an einer Verbindung der Formel Ia 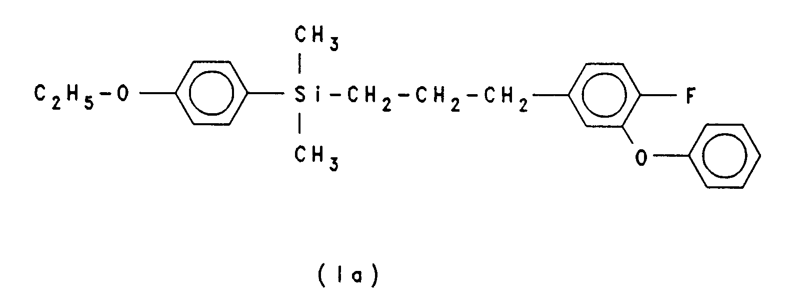
(4-Ethoxyphenyl)-(dimethyl)-[3-(4-fluor-3-phenoxy-phenyl)-propyl]-silan.

Die Herstellung dieser Verbindung ist in der EP-A 0224024 beschrieben.

Es wurden nun neue Kombinationen von Verbindungen der Formel Ia mit anderen ausgewählten Insektiziden oder Akariziden gefunden, bei denen überraschenderweise synergistische Wirkungen auftreten.

Gegenstand der vorliegenden Erfindung sind daher Schädlingsbekämpfungsmittel, die gekennzeichnet sind durch einen synergistisch wirksamen Gehalt an einer Verbindung der Formel Ia in Kombination mit einer Verbindung aus der Gruppe Endosulfan (IX), Deltamethrin (XIIIa), Triazophos (XIIIb), Heptenophos (XIIIc) und der Verbindung der Formel XIVa 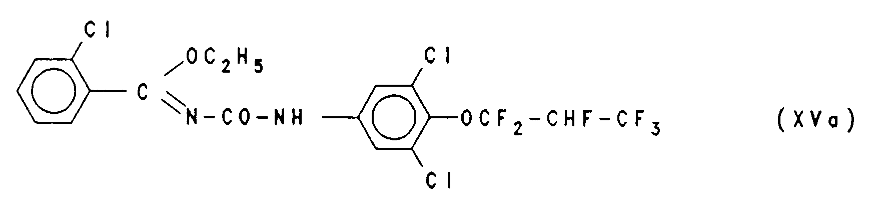
(N-[N-(3,5-Dichlor-4-(1,1,2,3,3,3-hexafluorpropoxy)-phenyl)carbamoyl]-2-chlor-benzcarboximidsäureethylester).

Die obengenannten Wirkstoffe der Formeln IX und XIIIa-XIIIc, für die common names angegeben wurden, sind in CH.R. Worthing, S.B. Walker, The Pesticide Manual, 8th ed., British Crop Protection Council (1987) beschrieben.

Die Verbindung der Formel XVa ist in der EP-A 0135894 beschrieben.

Erfindungsgemäß können die Verbindungen der Formel Ia auch mit zwei oder mehreren der aufgezählten Wirkstoffe kombiniert werden.

Die insektizide und akarizide Wirksamkeit der erfindungsgemäßen Wirkstoffkombinationen liegt deutlich höher als von den Wirkungen der Einzelkomponenten zu erwarten war. Durch Anwendung dieser Kombinationen können daher die Aufwandmengen der Einzelkomponenten reduziert werden. Ihre Anwendung bringt demzufolge ökonomische wie auch ökologische Vorteile.

Die erfindungsgemäßen Mittel eignen sich bei guter Pflanzenverträglichkeit und günstiger Warmblütertoxizität.
zur Bekämpfung von tierischen Schädlingen, insbesondere Insekten, Spinnentieren und Nematoden, besonders bevorzugt zur Bekämpfung von Insekten und Akariden, sowie deren Entwicklungsstadien, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:
aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reculitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis, blancardella, Hyponomeuta padella, Plutella maculipennis, Malacosoma neustria, Euproctis chrysorrhoea, Lymantria ssp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Pannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Insbesondere eignen sich die erfindungsgemäßen Wirkstoffkombinationen zur Bekämpfung von Heliothis spp., Anthonomus spp. und Trichoplusia spp. und anderer fressender und saugender Insekten oder Spinnmilben (Weiße Fliege, Lepidoptera-Larven) in Baumwolle, sowie von Schädlingen im Obst- und Schmetterlingen in Gemüse- und Weinbau.

Die erfindungsgemäßen Mittel enthalten die Wirkstoffe im allgemeinen zu 1 bis 99 Gew.-%.

Sie können auf verschiedene Art formuliert werden, je nachdem wie es durch die biologischen und/oder chemisch-physikalischen Parameter vorgegeben ist. Als Formulierungsmöglichkeiten kommen daher infrage: Spritzpulver (WP), emulgierbare Konzentrate (EC), wäßrige Lösungen (SC), Emulsionen, versprühbare Lösungen, Dispersionen auf Öl- oder Wasserbasis (SC), Suspoemulsionen (SC), Stäubemittel (DP), Beizmittel, Granulate in Form von Mikro-, Sprüh-, Aufzugs- udn Adsorptionsgranulaten, wasserdispergierbare Granulate (WG), ULV-Formulierungen, Mikrokapseln, Wachse oder Köder.

Diese einzelnen Formulierungstypen sind im Prinzip bekannt und werden beispielsweise beschrieben in Winnacker-Küchler, "Chemische Technologie", Band 7, C. Hauser Verlag München, 4. Aufl. 1986; van Falkenberg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix. Spritzpulver sind in Wasser gleichmäßig dispergierbare Präparate, die neben dem Wirkstoff außer einem Verdünnungs-oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2′-dinaphthylmethan-6,6′-disulfonsaures Natrium, dibutylnaphthalin-sulfonsaures Natrium oder auch oleylmethyltaurinsaures Natrium enthalten. Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calcium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Granulate können entweder durch Verdüsen des Wirkstoffes auf adsoprtionsfähiges, granuliertes Inertmaterial hergestellt werden oder durch Aufbringen von Wirkstoffkonzentraten mittels Klebemittel, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Fülloder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

Das Gewichtsverhältnis der Verbindung der Formel Ia zum Kombinationspartner variiert in den erfindungsgemäßen Mitteln je nach dem zu verwendenden Kombinationspartner im Bereich zwischen 20:1 und 1:20. Ebenso können die Anwendungskonzentrationen der Kombinationen in Abhängigkeit des zu verwendenden Kombinationspartners variieren und zwar zwischen 5 g bis 3000 g Wirkstoff,/ha, insbesondere zwischen 20 g und 1000 g Wirkstoff/ha.

Die nachfolgenden Beispiele dienen zur Erläuterung der Erfindung.

### A. Formulierungsbeispiele

a) Ein Stäubemittel wird erhalten, indem man 10 Gew.-Teile Wirkstoff und 90 Gew.-Teile Talkum als Inertstoff mischt und in einer Schlagmühle zerkleinert.
b) Ein in Wasser dispergierbares, benetzbares Pulver wird erhalten, indem man 25 Gew.-Teile Wirkstoff, 65 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat stellt man her, indem man 40 Gew.-Teile Wirkstoff mit 7 Gew.-Teilen eines Sulfobernsteinsäurehalbesters, 2 Gew.-Teile eines Ligninsulfonsäure-Natriumsalzes und 51 Gew.-Teile Wasser mischt und in einer Reibkugelmühle auf eine Feinheit von unter 5 Mikron vermahlt.
d) Ein emulgierbares Konzentrat läßt sich herstellen aus 15 Gew.-Teilen Wirkstoff, 75 Gew.-Teilen Cyclohexanon als Lösungsmittel und 10 Gew.-Teilen oxethyliertem Nonylphenol (10 AeO) als Emulgator.
e) Ein Granulat läßt sich herstellen aus 2 bis 15 Gew.-Teilen Wirkstoff und einem inerten Granulatträgermaterial wie Attapulgit, Bimsgranulat und/oder Quarzsand. Zweckmäßigerweise verwendet man eine Suspension des Spritzpulvers aus Beispiel b) mit einem Feststoffanteil von 30 % und spritzt diese auf die Oberfläche eines Attapulgitgranulats, trocknet und vermischt innig. Dabei beträgt der Gewichtsanteil des Spritzpulvers ca. 5 % und der das inerten Trägermaterials ca. 95 % des fertigen Granulats.

### B. Biologische Beispiele

### Beispiel A (Prodenia litura)

Larven des ägyptischen Baumwollwurms (Prodenia litura, LIII) wurden zusammen mit Blättern der Baumwolle mit gleichen Mengen verschieden konzentrierter Wirkstoffe - bzw. deren Mischungen besprüht.
Die so behandelten Larven wurden anschließend auf die getrockneten Blätter gesetzt. Der Effekt der Wirkstoffe bzw. der Wirkstoffgemische wurde 7 Tage nach Aufbewahrung bei Raumtemperatur (21-23°C) bewertet.

| Wirkstoff | Wirkstoff ppm | % Mortalität |
|---|---|---|
| Verbindung Ia | 31 | 100 |
| | 16 | 100 |
| | 7,8 | 60 |
| | 3,9 | 0 |
| | 2,0 | 0 |
| | 1,0 | 0 |
| Verbindung XVa | 31 | 100 |
| | 16 | 100 |
| | 7,8 | 100 |
| | 3,9 | 40 |
| | 2,0 | 0 |
| | 1,0 | 6 |
| Ia + XVa | 31 + 31 | 100 |
| | 16 + 16 | 100 |
| | 7,8 + 7,8 | 100 |
| | 3,9 + 3,9 | 100 |
| | 2,0 + 2,0 | 50 |
| | 1,0 + 1,0 | 20 |

| Wirkstoff | Wirkstoff ppm | % Mortalität |
|---|---|---|
| Verbindung IX | 500 | 100 |
| | 250 | 60 |
| | 125 | 50 |
| | 63 | 30 |
| | 31 | 10 |
| I a + IX | 31 + 500 | 100 |
| | 16 + 250 | 100 |
| | 7,8 + 125 | 100 |
| | 3,9 + 63 | 100 |
| | 2,0 + 32 | 40 |
| Deltamethrin (XIIIa) | 1,0 | 100 |
| | 0,98 | 90 |
| | 0,49 | 70 |
| | 0,24 | 0 |
| | 0,12 | 0 |
| I a + Deltamethrin (XIIIa) | 31 + 2,0 | 100 |
| | 16 + 0,98 | 100 |
| | 7,8 + 0,49 | 100 |
| | 3,9 + 0,24 | 90 |
| | 2,0 + 0,12 | 10 |

### Beispiel B (Tenebrio molitor)

Larven des Mehlkäfers (Tenebrio molitor LIII), sowie Stärke-Oblaten mit einem Durchmesser von 4 cm wurden gemeinsam mit einer gleichen Menge verschieden konzentrierter Wirkstoffe bzw. deren Mischungen gleichmäßig besprüht.
Die so behandelten Larven und Oblaten wurden anschließend in Petrischalen gegeben, diese verschlossen und 7 Tage bei Raumtemperatur (21-23°C) aufbewahrt. Danach wurde die Mortalität (in %) bestimmt.

| Wirkstoff | Wirkstoff ppm | % Mortalität |
|---|---|---|
| Verbindung Ia | 250 | 100 |
| | 125 | 100 |
| | 63 | 90 |
| | 31 | 70 |
| | 16 | 10 |
| Verbindung XVa | 125 | 80 |
| | 63 | 40 |
| | 31 | 10 |
| | 16 | 0 |
| | 8 | 0 |
| Ia + XVa | 250 + 125 | 100 |
| | 125 + 63 | 100 |
| | 63 + 31 | 100 |
| | 31 + 16 | 90 |
| | 16 + 8 | 40 |

### Beispiel C

Mit Kundebohnenblattlaus (Aphis craccivora) stark besetzte Ackerbohnen (Vicia faba) wurden mit gleichen Mengen verschieden konzentrierter Wirkstoffe bzw. deren Mischungen besprüht.

Die so behandelten Pflanzen wurden anschließend im Gewächshaus aufgestellt. Die Mortalität der Blattläuse wurde nach 3 Tagen bestimmt.

| Wirkstoff | Wirkstoff ppm | % Mortalität |
|---|---|---|
| Verbindung Ia | 63,0 | 40 |
| | 31,0 | 0 |
| | 16,0 | 0 |
| Verbindung IX | 7,8 | 20 |
| | 3,9 | 0 |
| | 2,0 | 0 |
| Ia + IX | 63,0 + 7,8 | 90 |
| | 31,0 + 3,9 | 80 |
| | 16,0 + 2,0 | 40 |
| Triazophos | 3,9 | 20 |
| | 2,0 | 0 |
| Ia + Triazophos | 31,0 + 3,9 | 60 |
| | 16,0 + 2,0 | 40 |
| Deltamethrin | 0,06 | 30 |
| | 0,03 | 15 |
| Ia + Deltamethrin | 7,8 + 0,06 | 85 |
| | 3,9 + 0,03 | 80 |

### Beispiel D

Mit Citrus-Schmierlaus (Pseudococcus citri) stark befallene Bohnenpflanzen (Phaseolus vulgaris) wurden mit gleichen Mengen verschieden konzentrierter Wirkstoffe bzw. deren Mischungen besprüht. Nach einer Standzeit von 7 Tagen im Gewächshaus bei 20-25°C erfolgte die Kontrolle.

| Wirkstoff | Wirkstoff ppm | % Mortalität |
|---|---|---|
| Verbindung Ia | 31,0 | 15 |
| | 16,0 | 0 |
| | 7,8 | 0 |
| Triazophos | 2,0 | 15 |
| | 0,98 | 0 |
| Ia + Triazophos | 16,0 + 2,0 | 60 |
| | 7,8 + 0,98 | 40 |
| Heptenophos | 7,8 | 0 |
| | 3,9 | 0 |
| Ia + Heptenophos | 31,0 + 7,8 | 75 |
| | 16,0 + 3,9 | 50 |

## Patentansprüche (Patentansprüche für folgende(n) Vertragsstaat(en): AT, BE, CH, DE, FR, GB, GR, IT, LI, NL, SE)

1. Schädlingsbekämpfungsmittel, gekennzeichnet durch einen synergistisch wirksamen Gehalt an einer Verbindung der Formel Ia 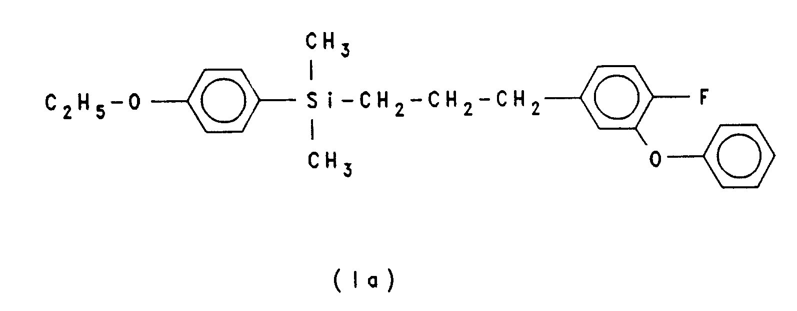 in Kombination mit einer Verbindung aus der Gruppe Endosulfan (IX),
Deltamethrin (XIIIa), Triazophos (XIIIb), Heptenophos (XIIIc) und der Verbindung der Formel XVa

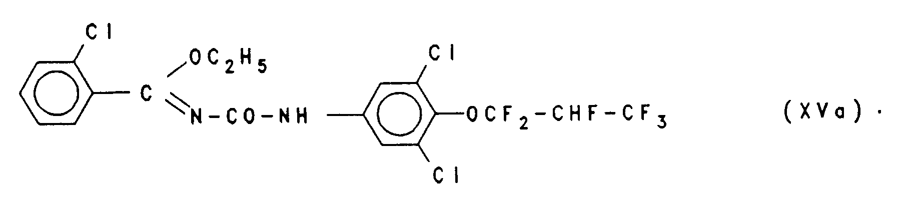

2. Mittel gemäß Anspruch 1, dadurch gekennzeichnet, daß sie Endosulfan (IX) enthalten.

3. Mittel gemäß Anspruch 1, dadurch gekennzeichnet, daß sie Deltamethrin (XIIIa) enthalten.

4. Mittel gemäß Anspruch 1, dadurch gekennzeichnet, daß sie Triazophos (XIIIb) enthalten.

5. Mittel gemäß Anspruch 1, dadurch gekennzeichnet, daß sie Heptenophos (XIIIc) enthalten.

6. Mittel gemäß Anspruch 1, dadurch gekennzeichnet, daß sie die Verbindung der Formel XVa enthalten.

7. Mittel gemäß einem oder mehreren der Ansprüche 1 bis 6, dadurch gekennzeichnet, daß das Gewichtsverhältnis der Verbindung der Formel Ia zum Kombinationspartner zwischen 20:1 und 1:20 variiert.

8. Verfahren zur Bekämpfung von Insekten, Akariden oder Nematoden, dadurch gekennzeichnet, daß man diese oder ihren Lebensraum mit einer wirksamen Menge eines Mittels gemäß Ansprüchen 1 bis 7 behandelt.

## Patentansprüche (Patentansprüche für folgende(n) Vertragsstaat(en): ES)

1. Verfahren zur Bekämpfung von Insekten, Akariden oder Nematoden, dadurch gekennzeichnet, daß man diese oder ihren Lebensraum mit einer synergistisch wirksamen Menge eines Mittels, enthaltend eine Verbindung der Formel Ia 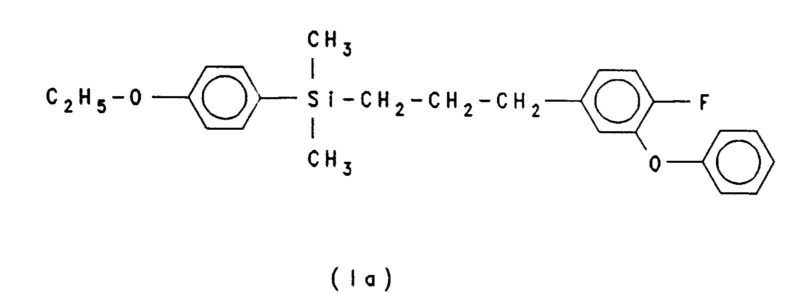 in Kombination mit einer Verbindung aus der Gruppe Endosulfan (IX),
Deltamethrin (XIIIa), Triazophos (XIIIb), Heptenophos (XIIIc) und der Verbindung der Formel XVa 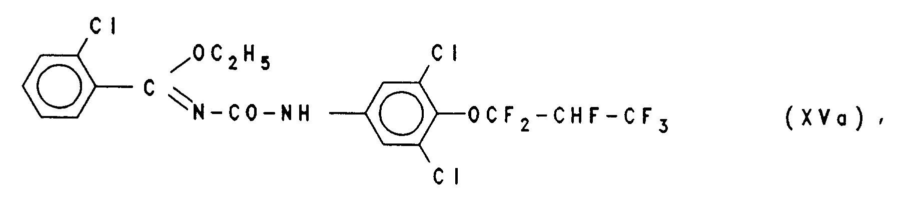 behandelt.

2. Verfahren gemäß Anspruch 1, dadurch gekennzeichnet, daß als Kombinationspartner Endosulfan (IX) verwendet wird.

3. Verfahren gemäß Anspruch 1, dadurch gekennzeichnet, daß als Kombinationspartner Deltamethrin (XIIIa) verwendet wird.

4. Verfahren gemäß Anspruch 1, dadurch gekennzeichnet, daß als Kombinationspartner Thriazophos (XIIIb) verwendet wird.

5. Verfahren gemäß Anspruch 1, dadurch gekennzeichnet, daß als Kombinationspartner Heptenophos (XIIIc) verwendet wird.

6. Verfahren gemäß Anspruch 1, dadurch gekennzeichnet, daß als Kombinationspartner die Verbindung der Formel XVa verwendet wird.

7. Verfahren gemäß einem oder mehreren der Ansprüche 1 bis 6, dadurch gekennzeichnet, daß das Gewichtsverhältnis der Verbindung der Formel Ia zum Kombinationspartner zwischen 20:1 und 1:20 variiert.

## Claims (Claims for the following Contracting State(s): AT, BE, CH, DE, FR, GB, GR, IT, LI, NL, SE)

1. A pesticide which comprises a synergistically effective content of a compound of the formula Ia 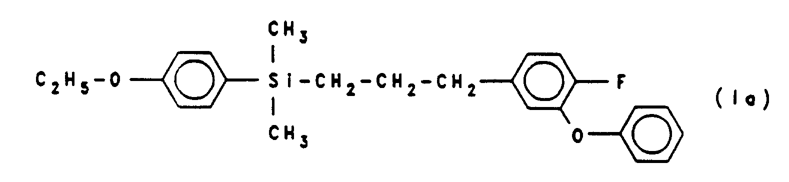 in combination with a compound from the group consisting of endosulfan (IX), deltamethrin (XIIIa), triazophos (XIIIb), heptenophos (XIIIc) and the compound of the formula XVa

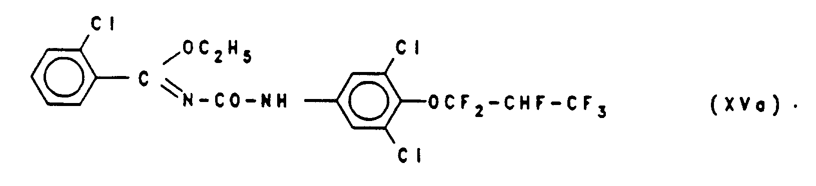

2. An agent as claimed in claim 1, containing endosulfan (IX).

3. An agent as claimed in claim 1, containing deltamethrin (XIIIa).

4. An agent as claimed in claim 1, containing triazophos (XIIIb).

5. An agent as claimed in claim 1, containing heptenophos (XIIIc).

6. An agent as claimed in claim 1, containing the compound of the formula XVa.

7. An agent as claimed in one or more of claims 1 to 6, wherein the ratio by weight of the compound of the formula Ia to the combination partner varies between 20:1 and 1:20.

8. A method of controlling insects, acarides or nematodes, wherein these or their environment are (is) treated with an effective amount of an agent as claimed in any one of claims 1 to 7.

## Claims (Claims for the following Contracting State(s): ES)

1. A method of controlling insects, acarides or nematodes, wherein these or their environment are (is) treated with a synergistically effective amount of an agent containing a compound of the formula Ia 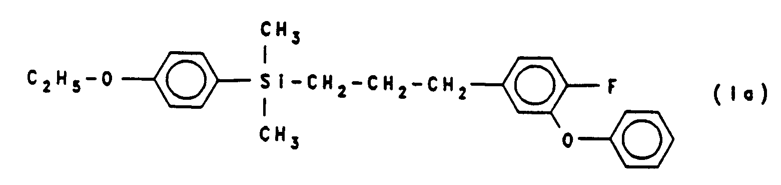 in combination with a compound from the group consisting of endosulfan (IX), deltamethrin (XIIIa), triazophos (XIIIb), heptenophos (XIIIc) and the compound of the formula XVa

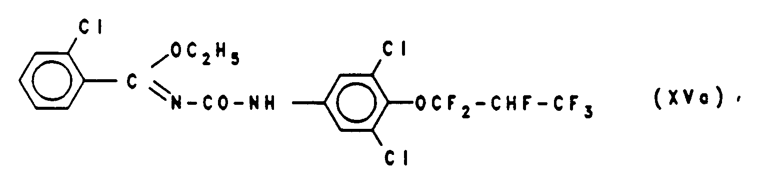

2. The method as claimed in claim 1, wherein endosulfan (IX) is used as a component of the combination.

3. The method as claimed in claim 1, wherein deltamethrin (XIIIa) is used as a component of the combination.

4. The method as claimed in claim 1, wherein triazophos (XIIIb) is used as a component of the combination.

5. The method as claimed in claim 1, wherein heptenophos (XIIIc) is used as a component of the combination.

6. The method as claimed in claim 1, wherein the compound of the formula XVa is used as a component of the combination.

7. The method as claimed in one or more of claims 1 to 6, wherein the ratio by weight of the compound of the formula Ia to the component of the combination varies between 20:1 and 1:20.

## Revendications (Revendications pour l'(les) Etat(s) contractant(s) suivant(s): AT, BE, CH, DE, FR, GB, GR, IT, LI, NL, SE)

1. Compositions pesticides, caractérisées par une teneur à effet synergique en un composé de formule Ia 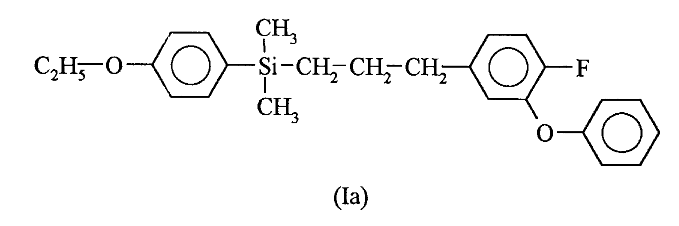 en combinaison avec un composé du groupe constitué par l'endosulfane (IX), la deltaméthrine (XIIIa), le triazophos (XIIIb), l'hepténophos (XIIIc) et le composé de formule XVa

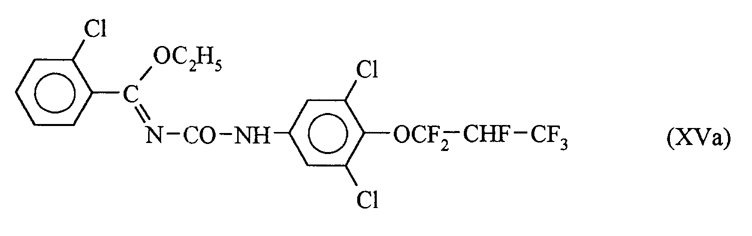

2. Compositions selon la revendication 1, caractérisées en ce qu'elles contiennent de l'endosulfane (IX).

3. Compositions selon la revendication 1, caractérisées en ce qu'elles contiennent de la deltaméthrine (XIIIa).

4. Compositions selon la revendication 1, caractérisées en ce qu'elles contiennent du triazophos (XIIIb).

5. Compositions selon la revendication 1, caractérisées en ce qu'elles contiennent de l'hepténophos (XIIIc).

6. Compositions selon la revendication 1, caractérisées en ce qu'elles contiennent le composé de formule (XVa).

7. Compositions selon l'une ou plusieurs des revendications 1 à 6, caractérisées en ce que le rapport en masse du composé de formule Ia au partenaire de la combinaison varie entre 20:1 et 1:20.

8. Procédé de lutte contre des insectes, des acariens ou des nématodes, caractérisé en ce qu'on les traite ou on traite leur biotope avec une quantité efficace d'une composition selon les revendications 1 à 7.

## Revendications (Revendications pour l'(les) Etat(s) contractant(s) suivant(s): ES)

1. Procédé de lutte contre des insectes, des acariens ou des nématodes, caractérisé en ce qu'on les traite ou on traite leur biotope avec une quantité à effet synergique d'une composition contenant un composé de formule Ia 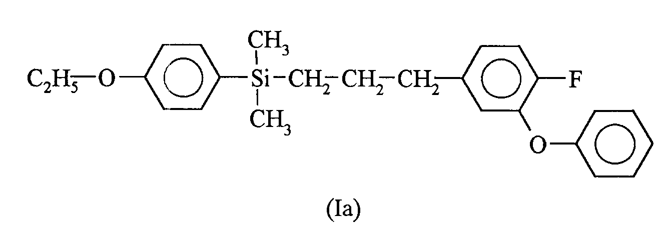 en combinaison avec un composé du groupe constitué par l'endosulfane (IX), la deltaméthrine (XIIIa), le triazophos (XIIIb), l'hepténophos (XIIIc) et le composé de formule XVa

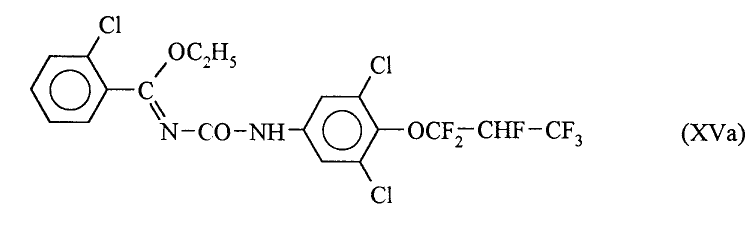

2. Procédé selon la revendication 1, caractérisé en ce que l'on utilise de l'endosulfane (IX) comme partenaire de la combinaison.

3. Procédé selon la revendication 1, caractérisé en ce que l'on utilise de la deltaméthrine (XIIIa) comme partenaire de la combinaison.

4. Procédé selon la revendication 1, caractérisé en ce que l'on utilise du triazophos (XIIIb) comme partenaire de la combinaison.

5. Procédé selon la revendication 1, caractérisé en ce que l'on utilise de l'hepténophos (XIIIc) comme partenaire de la combinaison.

6. Procédé selon la revendication 1, caractérisé en ce que l'on utilise le composé de formule (XVa) comme partenaire de la combinaison.

7. Procédé selon l'une ou plusieurs des revendications 1 à 6, caractérisé en ce que le rapport en masse du composé de formule Ia au partenaire de la combinaison varie entre 20:1 et 1:20.
